# FASCICULE DE BREVET EUROPEEN

(11) **EP 3 022 403 B1**
(45) Date de publication et mention de la délivrance du brevet: **25.08.2021**
(21) Numéro de dépôt: 14755859.7
(22) Date de dépôt: 10.07.2014
(51) Int. Cl.: F01D 25/18, F02C 7/28

(54) **DISPOSITIF DE PROTECTION CONTRE DES FUITES D'HUILE VERS LES ROTORS D'UNE TURBINE DE TURBOMACHINE**
VORRICHTUNG ZUM SCHUTZ VOR ÖLLECKS FÜR ROTOREN EINER TURBOMASCHINENTURBINE
DEVICE FOR PROTECTING AGAINST OIL LEAKS TOWARDS THE ROTORS OF A TURBOMACHINE TURBINE

(30) Priorité: 16.07.2013 FR 1357001
(43) Date de publication de la demande: 25.05.2016
(73) Titulaire: Safran Aircraft Engines, 75015 Paris (FR)
(72) Inventeur: TROHEL, Mathieu Jean Pierre, F-77550 Moissy-cramayel Cedex (FR); FONTANEL, Eddy Stéphane Joël, F-77550 Moissy-cramayel Cedex (FR)
(74) Mandataire: Cabinet Beau de Loménie
(86) Numéro de dépôt international: PCT/FR2014/051782
(87) Numéro de publication internationale: WO 2015/007980

(56) Documents cités:
- EP-A1- 2 090 764
- WO-A1-2012/069772
- US-A- 5 088 742

## Description

### Arrière-plan de l'invention

La présente invention se rapporte au domaine général des turbines d'une turbomachine, et notamment de la turbine basse-pression. Elle vise plus précisément un dispositif permettant de protéger les rotors d'une turbine contre les risques d'un feu d'huile.

L'arbre basse-pression d'une turbomachine entraîne en rotation les différents étages de la turbine basse-pression par l'intermédiaire d'un tourillon fixé sur l'arbre basse-pression. Ce tourillon délimite en amont une cavité amont intérieure dans laquelle chemine de l'air destiné à venir ventiler les différents disques de la turbine basse-pression disposés en aval de ce tourillon.

A cet effet, le tourillon de l'arbre basse-pression présente des trous de ventilation permettant à l'air de ventilation prélevé en amont dans le moteur d'alimenter une cavité aval extérieure en transitant par une cavité amont intérieure. Cet air de ventilation est ensuite guidé vers les disques des différents étages de la turbine basse-pression en aval du tourillon pour les refroidir.

Par ailleurs, il est possible que de l'huile provenant de fuites du circuit de lubrification et des enceintes d'huile de la turbomachine se retrouve également présent dans la cavité amont intérieure de la turbine basse-pression. Cette huile a tendance à se mélanger à l'air de ventilation et à emprunter le même cheminement que celui-ci pour se retrouver dans la cavité aval de la turbine basse-pression.

Or, l'environnement de cette cavité aval est relativement chaud, ce qui peut provoquer un feu d'huile dans cette cavité avec toutes les conséquences néfastes que cela pourrait engendrer.

### Objet et résumé de l'invention

La présente invention a donc pour but principal de pallier de tels inconvénients en proposant un dispositif permettant de protéger les rotors de la turbine contre les risques de feu d'huile.

Le document EP 2090764 divulgue un dispositif de protection contre des fuites d'huile vers les rotors d'une turbine de turbomachine.

A cet effet, il est prévu un rotor de turbine de turbomachine muni d'un dispositif de protection contre des fuites d'huile comprenant une cavité amont dans laquelle peut circuler un mélange air/huile, ladite cavité amont étant délimitée à l'aval par un tourillon du rotor de turbine et à l'extérieur par une bride d'étanchéité du tourillon s'étendant axialement vers l'amont, et une cavité aval s'ouvrant vers les disques de la turbine et communiquant avec la cavité amont par une pluralité de trous de ventilation pratiqués dans le tourillon, et comprenant en outre, conformément à l'invention, un déflecteur annulaire amont fixé sur la bride d'étanchéité du tourillon et s'étendant radialement vers l'intérieur en direction des trous de ventilation, le déflecteur amont présentant des orifices de passage d'huile pratiqués au niveau de son extrémité fixée sur la bride d'étanchéité du tourillon.

La présence du déflecteur amont permet de minimiser la quantité d'huile passant de la cavité amont à la cavité aval. En effet, ce déflecteur amont vient notamment faire obstacle au trajet direct du mélange air/huile venant traverser les trous de ventilation pratiqués dans le tourillon.

De plus, le positionnement de ce déflecteur amont permet d'assurer une séparation entre le trajet de l'air et le trajet de l'huile. En particulier, sous l'effet du différentiel de pression entre la cavité amont et la cavité aval, l'air du mélange air/huile va avoir tendance à passer sous le déflecteur amont et à cheminer jusqu'à la cavité aval en passant par les trous de ventilation. Quant à l'huile du mélange air/huile, sous l'effet de la force centrifuge de rotation du tourillon, elle va avoir tendance, une fois passé le déflecteur amont, à venir se plaquer contre la paroi intérieure de la bride d'étanchéité du tourillon et à remonter vers l'amont le long de celle-ci. La présence d'orifices de passage d'huile au niveau de l'extrémité du déflecteur amont qui est fixée sur la bride d'étanchéité du tourillon permet alors à l'huile d'être évacuée vers l'amont de la cavité amont, sans rencontrer d'écoulement d'air à contre-sens.

De la sorte, le dispositif selon l'invention permet d'obtenir un déshuilage du mélange air/huile présent dans la cavité amont avec l'huile qui est évacuée en amont pour y être récupérée et l'air qui vient alimenter la cavité aval pour ventiler les rotors de la turbine.

De préférence, le déflecteur amont s'étend radialement vers l'intérieur de sorte à masquer les trous de ventilation pratiqués dans le tourillon.

De préférence également, le déflecteur amont comprend une bride de fixation qui est fixée sur la bride d'étanchéité du tourillon par l'intermédiaire de systèmes d'attache de la bride d'étanchéité du tourillon sur le tourillon. Dans ce cas, les orifices de passage d'huile sont avantageusement pratiqués dans la bride de fixation du déflecteur amont et positionnés angulairement entre les systèmes d'attache de la bride d'étanchéité du tourillon sur le tourillon.

De préférence encore, le dispositif comprend en outre un déflecteur annulaire aval fixé sur le tourillon et s'étendant radialement vers l'extérieur en direction des trous de ventilation de sorte à délimiter avec le déflecteur amont une chicane pour le mélange air/huile circulant dans la cavité amont. La présence d'une telle chicane permet de favoriser la séparation entre l'air et l'huile du mélange air/huile et d'accentuer la centrifugation de l'huile sur la paroi intérieure de la bride d'étanchéité du tourillon.

Dans ce cas, le déflecteur aval s'étend avantageusement radialement vers l'extérieur de sorte à masquer les trous de ventilation. Ce masquage favorise la captation sur le déflecteur amont des éventuelles projections directes d'huile.

De même, le déflecteur aval est avantageusement intercalé axialement entre le déflecteur amont et les trous de ventilation pratiqués dans le tourillon.

Le dispositif peut comprendre en outre des raidisseurs assurant une liaison entre des extrémités libres des déflecteurs amont et aval.

Le déflecteur aval peut comprendre une bride de fixation qui est fixée sur le tourillon par l'intermédiaire de systèmes d'attache du tourillon sur un arbre de turbine.

L'invention a également pour objet une turbine de turbomachine comprenant un dispositif de protection contre des fuites d'huile tel que défini précédemment. L'invention a encore pour objet une turbomachine comprenant une telle turbine.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- la figure 1 est une vue schématique d'un dispositif de protection contre des fuites d'huile selon l'invention ;
- la figure 2 est une vue en perspective du déflecteur amont du dispositif de protection de la figure 1 ; et
- les figures 3 et 4 sont des vues schématiques de dispositifs de protection contre des fuites d'huile selon des variantes de réalisation de l'invention.

### Description détaillée de l'invention

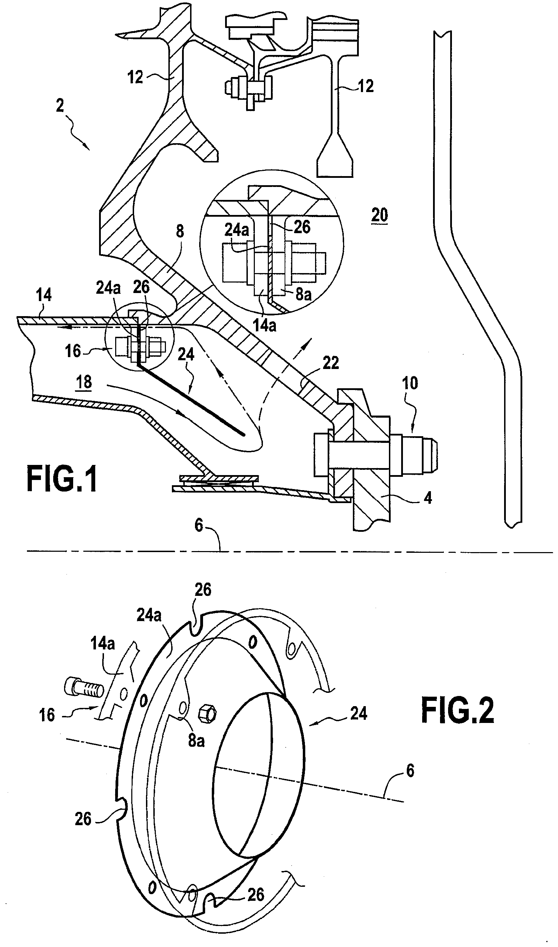

La figure 1 représente de façon schématique et partielle une turbine basse-pression 2 de turbomachine équipée d'un dispositif de protection contre les fuites d'huile selon l'invention. Bien entendu, l'invention s'applique à toute turbine de turbomachine.

De façon connue en soi, la turbine basse-pression 2 comprend un arbre basse-pression 4 centré sur un axe longitudinal 6 de la turbomachine.

Pour la suite de la description, les termes « amont » et « aval » seront utilisés par rapport au sens d'écoulement du flux gazeux traversant la turbomachine. De même, les termes « intérieur » et « extérieur » seront utilisés par rapport à l'axe longitudinal 6 de la turbomachine.

Sur l'arbre basse-pression 4, est fixée l'extrémité radiale intérieure d'un tourillon 8 par l'intermédiaire d'une pluralité de systèmes d'attache 10, par exemple du type à vis/écrou. Au niveau de son extrémité radiale opposée, le tourillon 8 est raccordé à un disque de rotor 12 d'un étage de la turbine basse-pression qu'il entraîne en rotation autour de l'axe longitudinal 6. Comme représenté sur la figure 1, ce disque de rotor 12 est relié aux disques de rotor 12 des autres étages de la turbine basse-pression.

Le tourillon 8 de la turbine basse-pression comprend également une bride d'étanchéité 14 qui s'étend axialement vers l'amont. Cette bride d'étanchéité 14 porte un dispositif d'étanchéité (par exemple un joint labyrinthe, non représenté sur les figures). Cette bride d'étanchéité peut être fixée sur le tourillon par l'intermédiaire d'une pluralité de systèmes d'attaches 16, par exemple du type à vis/écrou.

Le tourillon 8 de la turbine basse-pression (et sa bride d'étanchéité 14) délimite deux cavités, à savoir une cavité amont 18 et une cavité aval 20.

Plus précisément, la cavité amont 18 est formée du côté intérieure et est délimitée, d'une part radialement à l'extérieur par la bride d'étanchéité 14 du tourillon, et d'autre axialement à l'aval par le tourillon lui-même. Quant à la cavité aval 20, elle est formée du côté extérieure et est délimitée, d'une part axialement à l'amont par le tourillon, et d'autre part radialement à l'extérieur par les disques de rotor 12.

Les cavités amont 18 et aval 20 communiquent entre elles par l'intermédiaire d'une pluralité de trous de ventilation 22 pratiqués dans le tourillon 8 et régulièrement répartis autour de l'axe longitudinal 6 de la turbomachine. De façon connue, la cavité aval 20 débouche vers des circuits de ventilation des disques de rotor des différents étages de la turbine basse-pression (non représentés sur les figures).

De l'air prélevé en amont dans la turbomachine vient alimenter la cavité amont 18 pour ensuite passer dans la cavité aval 20 (par l'établissement d'un différentiel de pression entre les deux cavités) où il est utilisé pour alimenter les circuits de ventilation des disques de rotor.

Par ailleurs, il est possible que de l'huile provenant de fuites du circuit de lubrification et des enceintes d'huile de la turbomachine (non représentés sur les figures) se retrouve également présent dans la cavité amont 18. Or, cette huile ne doit pas se retrouver dans la cavité aval 20 pour éviter tout risque de déclencher un feu.

A cet effet, conformément à l'invention, il est prévu un déflecteur annulaire amont 24 qui est fixé sur la bride d'étanchéité 14 du tourillon. Ce déflecteur amont 24 est par exemple formé à partir d'une tôle et s'étend radialement vers l'intérieur en direction des trous de ventilation 22 pratiqués dans le tourillon de sorte à les masquer.

De plus, comme représenté sur la figure 2, le déflecteur amont 24 présente des orifices de passage d'huile 26 qui sont pratiqués au niveau de son extrémité fixée sur la bride d'étanchéité 14 du tourillon.

De façon plus précise, le déflecteur amont 24 comprend une bride de fixation 24a qui peut être fixée sur la bride d'étanchéité 14 du tourillon par l'intermédiaire des systèmes d'attache 16 de la bride d'étanchéité sur le tourillon. A cet effet, la bride d'étanchéité 14 du tourillon et le tourillon 8 présentent des festons, respectivement 14a et 8a, qui sont fixés entre eux par les systèmes d'attache 16.

Les trous de passage d'huile 26 sont pratiqués dans la bride de fixation 24a du déflecteur amont 24 et sont positionnés angulairement entre les festons 14a, 8a respectifs de la bride d'étanchéité 14 du tourillon et du tourillon 8.

Ces trous de passage d'huile 26 peuvent être régulièrement répartis autour de l'axe longitudinal 6 de la turbomachine et leur nombre et leurs dimensions sont adaptés notamment en fonction de la quantité d'huile à évacuer.

La bride de fixation 24a du déflecteur amont 24 permet également d'assurer un masquage des zones situées angulairement entre les festons respectifs 8a, 14a du tourillon et de sa bride d'étanchéité, de sorte à forcer le passage d'air à passer par l'intérieur du déflecteur amont.

De préférence, la dimension des trous de passage d'huile 26 est relativement faible pour qu'ils puissent rapidement être « gavés » d'huile et éviter ainsi tout passage d'air. Le passage d'air au niveau de l'extrémité du déflecteur amont qui est fixée sur la bride d'étanchéité du tourillon est par ailleurs interdit par la présence de la bride de fixation 24a du déflecteur qui forme un obstacle à un tel passage.

Ainsi, le déflecteur amont 24 masque les trous de ventilation 22 pratiqués dans le tourillon 8, empêchant le mélange air/huile s'écoulant dans la cavité amont 18 de traverser ces trous de ventilation pour rejoindre la cavité aval 20.

A la place, le mélange air/huile (dont le trajet est schématisé par un trait plein sur la figure 1) contourne le déflecteur amont. En sortie du déflecteur amont, et sous l'effet de la force centrifuge de rotation du tourillon 8, ce mélange air/huile se sépare en un trajet d'huile (schématisé par les traits mixtes) qui vient se plaquer contre la paroi intérieure de la bride d'étanchéité 14 du tourillon 8 et remonter vers l'amont le long de celle-ci, notamment en empruntant les trous de passage d'huile 26 pratiqués dans la bride de fixation 24a du déflecteur amont, et en un trajet d'air (schématisé par les traits pointillés) qui emprunte les trous de ventilation 22 pratiqués dans le tourillon sous l'effet du différentiel de pression existant entre les cavités amont et aval.

L'air ainsi déshuilé pénètre dans la cavité aval et peut alors alimenter les circuits de ventilation des disques de rotor des différents étages de la turbine basse-pression. Quant à l'huile récupérée contre la paroi intérieure de la bride d'étanchéité du tourillon, elle chemine vers l'amont le long de cette paroi sous l'effet de la force centrifuge et peut être récupérée plus en amont, par exemple au moyen d'écopes (non représentées sur les figures).

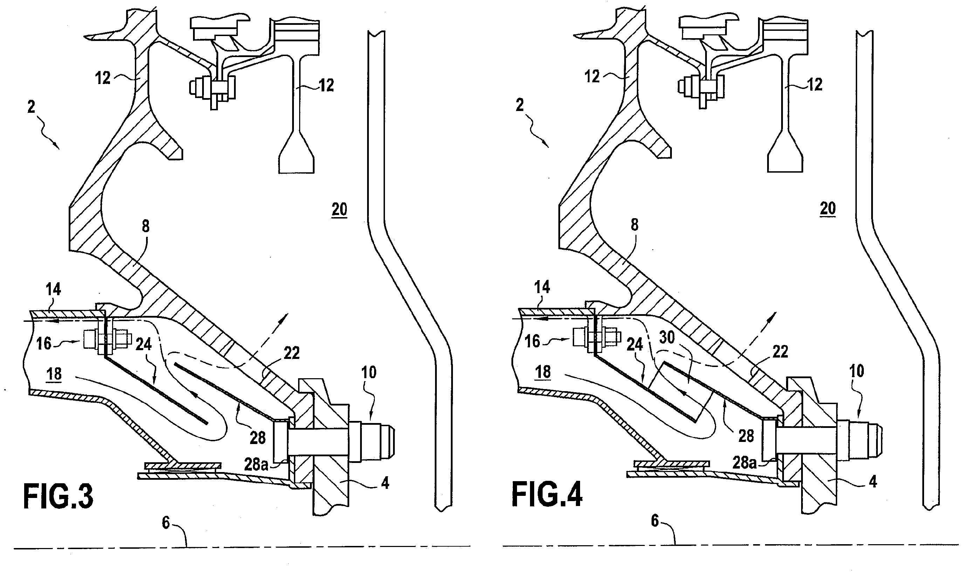

La figure 3 représente une variante de réalisation du dispositif de protection contre les fuites d'huile selon l'invention.

Ce dispositif de protection est identique à celui décrit en liaison avec les figures 1 et 2 et comprend en outre un déflecteur annulaire aval 28 qui est fixé sur le tourillon 8. Le déflecteur aval 28 est par exemple formé à partir d'une tôle et s'étend radialement vers l'extérieur en direction des trous de ventilation 22 pratiqués dans le tourillon 8 de sorte à les masquer.

Plus précisément, ce déflecteur aval 28 est intercalé axialement entre le déflecteur amont 24 et les trous de ventilation 22 et forme avec le déflecteur amont une chicane pour le mélange air/huile circulant dans la cavité amont 18 (dont le trajet est schématisé par un trait plein).

Le déflecteur aval 28 comprend une bride de fixation 28a qui peut être fixée sur le tourillon 8 par l'intermédiaire des systèmes d'attache 10 du tourillon 8 sur l'arbre basse-pression 4.

Ainsi, en masquant les trous de ventilation 22, les déflecteurs amont 24 et aval 28 empêchent le mélange air/huile s'écoulant dans la cavité amont 18 de traverser directement ces trous de ventilation pour rejoindre la cavité aval 20.

En sortie de la chicane formée par les déflecteurs 24, 28, et sous l'effet de la force centrifuge de rotation du tourillon, le mélange air/huile se sépare en un trajet d'huile (schématisé par les traits mixtes) qui vient se plaquer contre la paroi intérieure de la bride d'étanchéité 14 du tourillon et remonter vers l'amont le long de celle-ci, et en un trajet d'air (schématisé par les traits pointillés) qui emprunte les trous de ventilation 22 sous l'effet du différentiel de pression existant entre les cavités amont et aval.

L'air ainsi déshuilé pénètre dans la cavité aval et peut alors alimenter les circuits de ventilation des disques de rotor des différents étages de la turbine basse-pression. Quant à l'huile récupérée contre la paroi intérieure de la bride d'étanchéité du tourillon, elle chemine vers l'amont le long de cette paroi sous l'effet de la force centrifuge et peut être récupérée plus en amont.

La figure 4 représente une autre variante de réalisation du dispositif de protection contre les fuites d'huile selon l'invention.

Le dispositif selon cette variante est identique avec celui décrit en liaison avec la figure 3 et comprend en outre des raidisseurs 30 assurant une liaison entre des extrémités libres des déflecteurs amont 24 et aval 28 (c'est-à-dire leurs extrémités opposées à la bride de fixation).

Ces raidisseurs 30 peuvent être de simples tôles fixées aux extrémités libres des déflecteurs 24, 28 et espacées angulairement les unes des autres pour permettre le passage du mélange air/huile. Ils permettent de conférer une certaine tenue mécanique au dispositif de protection ainsi constitué.

## Revendications

1. Rotor de turbine de turbomachine muni d'un dispositif de protection contre des fuites d'huile, le rotor de turbine (2) comprenant des disques (12) et un tourillon (8), le tourillon de rotor comportant une bride d'étanchéité (14), le dispositif de protection comportant :
une cavité amont (18) dans laquelle peut circuler un mélange air/huile, ladite cavité amont étant délimitée à l'aval par le tourillon (8) du rotor de turbine et à l'extérieur par la bride d'étanchéité (14) du tourillon s'étendant axialement vers l'amont ; et
une cavité aval (20) s'ouvrant vers les disques de rotor (12) de la turbine et communiquant avec la cavité amont par une pluralité de trous de ventilation (22) pratiqués dans le tourillon ;
**caractérisé en ce que** le dispositif de protection comprend en outre un déflecteur annulaire amont (24) fixé sur la bride d'étanchéité du tourillon et s'étendant radialement vers l'intérieur en direction des trous de ventilation, le déflecteur amont présentant des orifices de passage d'huile (26) pratiqués au niveau de son extrémité fixée sur la bride d'étanchéité du tourillon.

2. Rotor de turbine selon la revendication 1, dans lequel le déflecteur amont s'étend radialement vers l'intérieur de sorte à masquer les trous de ventilation pratiqués dans le tourillon.

3. Rotor de turbine selon l'une des revendications 1 et 2, dans lequel le déflecteur amont (24) comprend une bride de fixation (24a) qui est fixée sur la bride d'étanchéité (14) du tourillon par l'intermédiaire de systèmes d'attache (16) de la bride d'étanchéité du tourillon sur le tourillon (8).

4. Rotor de turbine selon la revendication 3, dans lequel les orifices de passage d'huile sont pratiqués dans la bride de fixation (24a) du déflecteur amont (24) et positionnés angulairement entre les systèmes d'attache (16) de la bride d'étanchéité du tourillon sur le tourillon.

5. Rotor de turbine selon l'une quelconque des revendications 1 à 4, comprenant en outre un déflecteur annulaire aval (28) fixé sur le tourillon et s'étendant radialement vers l'extérieur en direction des trous de ventilation de sorte à délimiter avec le déflecteur amont (24) une chicane pour le mélange air/huile circulant dans la cavité amont.

6. Rotor de turbine selon la revendication 5, dans lequel le déflecteur aval s'étend radialement vers l'extérieur de sorte à masquer les trous de ventilation.

7. Rotor de turbine selon l'une des revendications 5 et 6, le déflecteur aval est intercalé axialement entre le déflecteur amont et les trous de ventilation pratiqués dans le tourillon.

8. Rotor de turbine selon l'une quelconque des revendications 5 à 7, comprenant en outre des raidisseurs (30) assurant une liaison entre des extrémités libres des déflecteurs amont (24) et aval (28).

9. Rotor de turbine selon l'une quelconque des revendications 5 à 8, dans lequel le déflecteur aval (28) comprend une bride de fixation (28a) qui est fixée sur le tourillon (8) par l'intermédiaire de systèmes d'attache (10) du tourillon sur un arbre de turbine (4).

10. Turbine (2) de turbomachine comprenant un rotor de turbine muni d'un dispositif de protection contre des fuites d'huile selon l'une quelconque des revendications 1 à 9.

11. Turbomachine comprenant une turbine selon la revendication 10.

## Patentansprüche

1. Turbomaschinenturbinenrotor, der mit einer Vorrichtung zum Schutz vor Öllecks versehen ist, wobei der Turbinenrotor (2) Scheiben (12) und einen Zapfen (8) umfasst, wobei der Rotorzapfen einen Dichtungsflansch (14) umfasst, wobei die Schutzvorrichtung umfasst:
einen stromaufwärtigen Hohlraum (18), in dem ein Luft/Öl-Gemisch zirkulieren kann, wobei der stromaufwärtige Hohlraum auf der stromabwärtigen Seite durch den Zapfen (8) des Turbinenrotors und außen durch den Dichtungsflansch (14) des Zapfens begrenzt ist, der sich axial hin zur stromaufwärtigen Seite erstreckt; und
einen stromabwärtigen Hohlraum (20), der hin zu den Rotorscheiben (12) der Turbine offen ist und mit dem stromaufwärtigen Hohlraum durch eine Vielzahl von Lüftungslöchern (22) verbunden ist, die in dem Zapfen angeordnet sind;
**dadurch gekennzeichnet, dass** die Schutzvorrichtung ferner einen stromaufwärtigen ringförmigen Deflektor (24) umfasst, der an dem Dichtungsflansch des Zapfens befestigt ist und sich radial nach innen in Richtung der Lüftungslöcher erstreckt, wobei der stromaufwärtige Deflektor Öldurchgangsöffnungen (26) aufweist, die im Bereich seines an dem Dichtungsflansch des Zapfens befestigten Endes angeordnet sind.

2. Turbinenrotor nach Anspruch 1, wobei der stromaufwärtige Deflektor sich derart radial nach innen erstreckt, dass er die in dem Zapfen angeordneten Lüftungslöcher maskiert.

3. Turbinenrotor nach einem der Ansprüche 1 und 2, wobei der stromaufwärtige Deflektor (24) einen Befestigungsflansch (24a) umfasst, der an dem Dichtungsflansch (14) des Zapfens über Systeme (16) zur Anbringung des Dichtungsflansches des Zapfens an dem Zapfen (8) befestigt ist.

4. Turbinenrotor nach Anspruch 3, wobei die Öldurchgangsöffnungen in dem Befestigungsflansch (24a) des stromaufwärtigen Deflektors (24) angeordnet sind und winklig zwischen den Systemen (16) zur Anbringung des Dichtungsflansches des Zapfens an dem Zapfen positioniert sind.

5. Turbinenrotor nach einem der Ansprüche 1 bis 4, der ferner einen stromabwärtigen ringförmigen Deflektor (28) umfasst, der an dem Zapfen befestigt ist und sich radial nach außen in Richtung der Lüftungslöcher erstreckt, derart, dass er mit dem stromaufwärtigen Deflektor (24) ein Hindernis für das in dem stromaufwärtigen Hohlraum zirkulierende Luft/Öl-Gemisch abgrenzt.

6. Turbinenrotor nach Anspruch 5, wobei der stromabwärtige Deflektor sich radial nach außen erstreckt, derart, dass er die Lüftungslöcher maskiert.

7. Turbinenrotor nach einem der Ansprüche 5 und 6, wobei der stromabwärtige Deflektor axial zwischen dem stromaufwärtigen Deflektor und den in dem Zapfen angeordneten Lüftungslöchern eingeschoben ist.

8. Turbinenrotor nach einem der Ansprüche 5 bis 7, der ferner Versteifungen (30) umfasst, die eine Verbindung zwischen den freien Enden des stromaufwärtigen (24) und des stromabwärtigen Deflektors (28) gewährleisten.

9. Turbinenrotor nach einem der Ansprüche 5 bis 8, wobei der stromabwärtige Deflektor (28) einen Befestigungsflansch (28a) umfasst, der über Systeme (10) zur Anbringung des Zapfens an einer Turbinenwelle (4) an dem Zapfen (8) befestigt ist.

10. Turbomaschinenturbine (2), die einen Turbinenrotor umfasst, der mit einer Vorrichtung zum Schutz vor Öllecks nach einem der Ansprüche 1 bis 9 versehen ist.

11. Turbomaschine, die eine Turbine nach Anspruch 10 umfasst.

## Claims

1. Turbine rotor of a turbomachine provided with a device for protecting against oil leaks, the turbine rotor (2) comprising discs (12) and a journal (8), the journal comprising a sealing flange (14), the device for protecting comprising:
an upstream cavity (18) in which an air/oil mixture can circulate, said upstream cavity being delimited downstream by the journal (8) of the turbine rotor and to the outside by the sealing flange (14) of the journal axially extending towards upstream; and
a downstream cavity (20) opening towards the rotor discs (12) of the turbine and communicating with the upstream cavity by a plurality of ventilation holes (22) made in the journal;
**characterized in that** the device for protecting further comprises an annular upstream deflector (24) fixed on the sealing flange of the journal and radially extending towards the inside in the direction of the ventilation holes, the upstream deflector having oil flow orifices (26) made at the level of its end fixed on the sealing flange of the journal.

2. Turbine rotor according to claim 1, wherein the upstream deflector radially extends towards the inside so as to mask the ventilation holes made in the journal.

3. Turbine rotor according to one of claims 1 and 2, wherein the upstream deflector (24) comprises a fixing flange (24a) which is fixed on the sealing flange (14) of the journal by means of fastening systems (16) of the sealing flange of the journal on the journal (8).

4. Turbine rotor according to claim 3, wherein the oil flow orifices are made in the fixing flange (24a) of the upstream deflector (24) and angularly positioned between the fastening systems (16) of the sealing flange of the journal on the journal.

5. Turbine rotor according to one of claims 1 to 4, further comprising a downstream annular deflector (28) fixed on the journal and radially extending towards the outside in the direction of the ventilation holes so as to delimit with the upstream deflector (24) a baffle for the air/oil mixture circulating in the upstream cavity.

6. Turbine rotor according to claim 5, wherein the downstream deflector radially extends towards the outside so as to mask the ventilation holes.

7. Turbine rotor according to one of claims 5 and 6, the downstream deflector is axially interposed between the upstream deflector and the ventilation holes made in the journal.

8. Turbine rotor according to any one of claims 5 to 7, further comprising stiffeners (30) ensuring a link between free ends of the upstream (24) and downstream (28) deflectors.

9. Turbine rotor according to any one of claims 5 to 8, wherein the downstream deflector (28) comprises a fixing flange (28a) which is fixed on the journal (8) by means of fastening systems (10) of the journal on a turbine shaft (4).

10. Turbine of a turbomachine (2) comprising a turbine rotor provided with a device for protecting against oil leaks according to any one of claims 1 to 9.

11. Turbomachine comprising a turbine according to claim 10.
